# EUROPEAN PATENT APPLICATION

(11) **EP 1 705 875 A2**
(43) Date of publication of application: **27.09.2006**
(21) Application number: 06002293.6
(22) Date of filing: 03.02.2006
(51) Int. Cl.: H04M 1/02

(54) **Mobile terminal having multi-directional camera**

(30) Priority: 24.03.2005 KR 2005024614
(71) Applicant: Samsung Electronics Co., Ltd., Suwon-si, Gyeonggi-Do (KR)
(72) Inventor: Lee, Kyu-Chul c/oSamsung Electronics Co., Ltd., Suwon-si, Gyeonggi-do (KR); Lee, Won-Sik c/oSamsung Electronics Co., Ltd., Suwon-si, Gyeonggi-do (KR)
(74) Representative: Grünecker, Kinkeldey, Stockmair & Schwanhäusser Anwaltssozietät

(57) **Abstract**

Disclosed is a mobile terminal having multi-directional camera lens modules. The mobile terminal includes a first camera lens module; a second camera lens module located opposite to the first camera lens module; and a printed circuit board interposed between and electrically connected to the first and second camera lens modules to apply an image signal or image signals captured through the first and second camera lens modules to a main body of the mobile terminal.

## Description

### BACKGROUND OF THE INVENTION

### 1. Field of the Invention

The present invention relates to a mobile terminal having multi-directional camera lens modules and in particular to a mobile terminal having plural camera lens modules adapted to be capable of multi-directional photographing.

### 2. Description of the Related Art

Typically, a camera module may be provided for recording an image in a video camera, an electronic still camera, a Personal Computer (PC) camera terminal, a Personal Digital Assistant (PDA) or similar device.

Recently, various camera devices have appeared which are miniaturized to such an extent that a photographer can take a picture while holding a camera device in his or her hands, without using a support such as a tripod. This has been possible because image capture screens of the camera devices as well as the camera devices have been greatly reduced in size, as high density techniques have been developed.

Through a camera lens module mounted in a mobile communication device or on other electronic devices, it has been possible to have image communications with another party or to take a photograph of an object as a still or moving image.

As described above, image communication devices have evolved to become composite appliances. The new composite devices incorporate a camera for temporarily capturing, storing and transmitting an instant image, thereby providing superior functionality over a conventional media device, which was used only for voice or word transfer.

Such mobile communication devices are classified into a bar type, flip type or folder type wireless terminal on the basis of their appearances. A bar type wireless terminal has a single housing formed in a bar shape; a flip type wireless terminal has a flip or cover rotatably connected to a bar-shaped housing through a hinge; and a folder type wireless terminal has a folder rotatably connected to a single bar-shaped housing through a hinge so that the folder is foldable on the housing. In addition, mobile communication devices may be classified into a neck-wearable type or wrist-wearable type wireless terminal on the basis of positions on which the mobile communication devices are to be worn on a user's body. A neck-wearable type wireless terminal is adapted to be worn around the user's neck using a cord. A wrist-wearable type wireless terminal is adapted to be worn around the wrist. Moreover, mobile communication devices may be classified into a rotation type or sliding type wireless terminal on the basis of their opening and shutting methods. A rotation type wireless terminal includes two housings, rotatably connected in such a way that they can be opened away from or shut to face one another. A sliding type wireless terminal includes two housings, of which one is capable of longitudinally sliding on the other so that the housings can be open or shut while facing one another. One skilled in the art will easily appreciate variously classified wireless terminals as enumerated above. The above-mentioned mobile terminals essentially include an antenna device, a data input and output device, and a data transceiver. While such a data input and output device can be usually implemented by a keypad, wherein a user can input data by compressing buttons on the keypad using fingers, a touch pad or touch screen may be alternatively employed as the data input and output device.

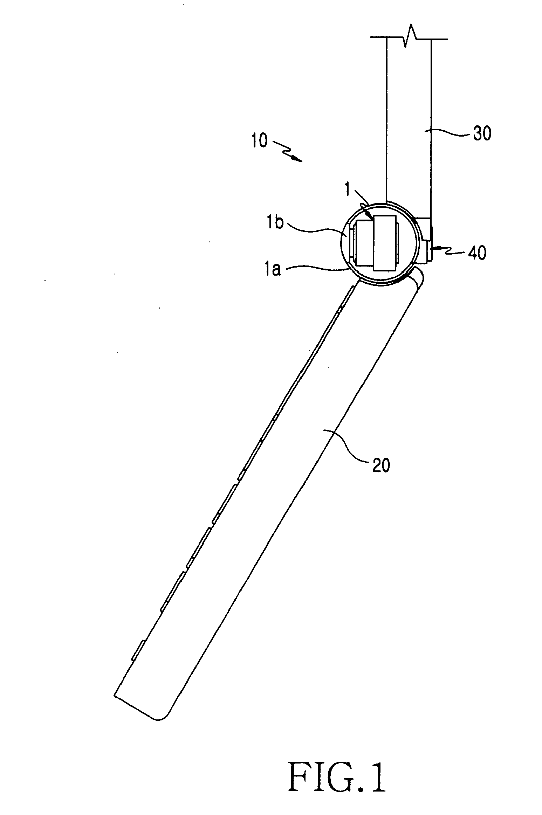

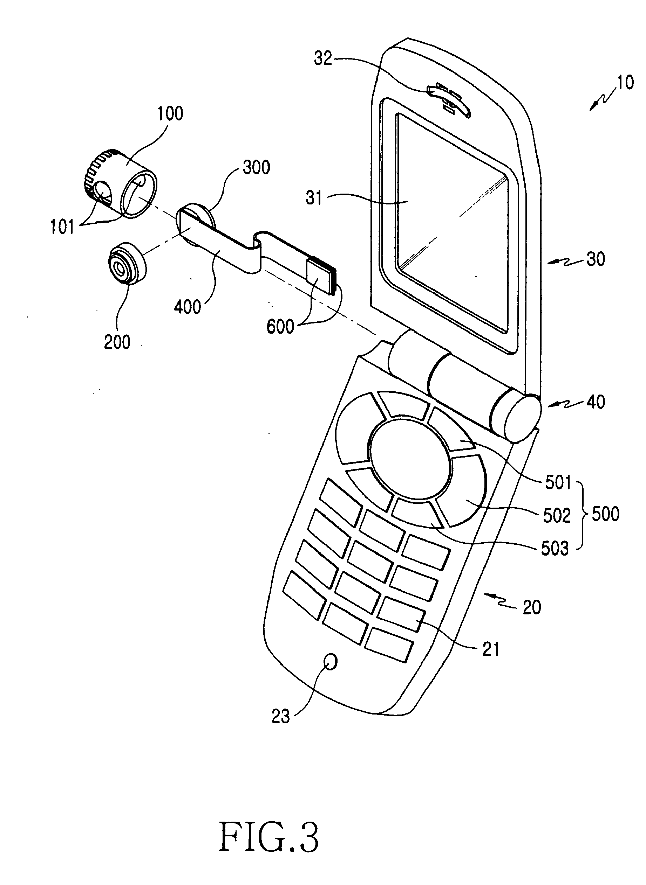

FIG. 1 and FIG. 3 illustrate a folder type mobile terminal 10 with a camera lens module including a main body 20, a folder 30 and a hinge 40. The folder 30 is provided with a liquid crystal display (LCD) 31 for displaying data and a speaker 32 as means for outputting data, while the main body 20 is basically provided with a keypad 21 having an array of plural keys and a microphone 23 as means for inputting data. FIG.1 shows the conventional camera lens module 1 installed in a lens housing 1 a provided in the terminal 10, wherein the lens housing 1 a is formed with a lens aperture 1 b.

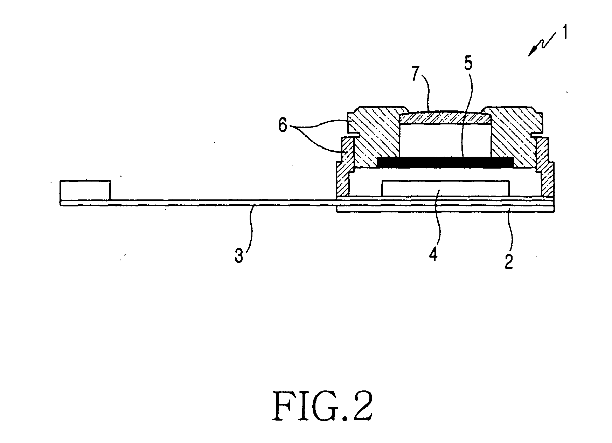

Referring to FIG. 2, the camera lens module 1 includes a printed circuit board (PCB) 2, a flexible printed circuit board (FPCB) 3 on the PCB 2, an image sensor 4, and an infrared (IR) filter 5, wherein a lens holder 6 is attached to the camera lens module 1 to house the above-mentioned components and provided with a camera lens 7.

However, with a mobile terminal having a conventional camera lens module as described above, a user can photograph only in one direction because a single camera lens module is provided in such a mobile terminal. Therefore, inconvenience results because it is necessary for the user either to directly rotate the camera lens module by hand or turn the mobile terminal when taking a picture in the opposite direction.

Moreover, there is a disadvantage in that the usefulness of such a mobile terminal is limited because it is impossible for a user to simultaneously take photographs in two directions with a single camera lens.

### SUMMARY OF THE INVENTION

Accordingly, the present invention has been made to solve the above-mentioned problems occurring in the prior art, and an object of the present invention is to provide a mobile terminal having plural camera lens modules so that a user can bi-directionally photograph in the forward and rearward directions or multi-directionally photograph using the camera lens modules.

Another object of the present invention is to provide a mobile terminal having multi-directional camera lens modules so that a user can simultaneously photograph plural objects arranged in two directions or multiple directions using the camera lens modules.

In order to achieve the above-mentioned objects, there is provided a mobile terminal including a first camera lens module; a second camera lens module located opposite to the first camera lens module; and a printed circuit board interposed between the first and second camera lens modules and electrically connected to the first and second lens modules to apply an image signal or image signals captured through the first and second camera lens modules to a main body of the mobile terminal.

### BRIEF DESCRIPTION OF THE DRAWINGS

The above and other objects, features and advantages of the present invention will be more apparent from the following detailed description taken in conjunction with the accompanying drawings, in which:
FIG. 1 is a lateral cross-sectional view of a conventional folder type mobile terminal showing the arrangement of a camera lens module mounted in the mobile terminal;
FIG. 2 is a lateral cross-sectional view showing the interior of the camera lens module of FIG. 1;
FIG. 3 is an exploded perspective view showing a construction of a mobile terminal provided with camera lens modules for multi-directional photographing according to an embodiment of the present invention;
FIG. 4 is a perspective view showing the photographic direction of a first camera lens module among components of a mobile terminal having camera lens modules for multi-directional photographing according to an embodiment of the present invention;
FIG. 5 is a perspective view showing the photographic direction of a second camera lens module among components of a mobile terminal having camera lens modules for multi-directional photographing according to an embodiment of the present invention;
FIG. 6 is a lateral cross-sectional view showing a construction of a mobile terminal having camera lens modules for multi-directional photographing according to an embodiment of the present invention; and
FIG. 7 is an enlarged lateral cross-sectional view of the part indicated by arrow A in FIG. 6.

### DETAILED DESCRIPTION OF THE PREFERRED EMBODIMENTS

Hereinafter, preferred embodiments of the present invention will be described with reference to the accompanying drawings. In the following description, a detailed description of known functions and configurations incorporated herein will be omitted when it may make the subject matter of the present invention unclear.

As shown in FIG. 3, a mobile terminal 10 having multi-directional camera lens modules includes first and second lens modules 200, 300, and a printed circuit board 400. The first lens module 200 is mounted in a main body 20 of the mobile terminal 10 at a predetermined position to be capable of photographing an object in one direction from the main body 20 of the mobile terminal 10 The second lens module 300 is positioned opposite to the first lens module 200 so as to be capable of photographing an object in the other direction from the main body 20 of the mobile terminal 10. The printed circuit board 400 is interposed between the first and second lens modules 200, 300 to be electrically connected to the first and second lens modules 200, 300 so as to apply an image signal or image signals captured through the first and second camera lens modules 200, 300 to the main body 20.

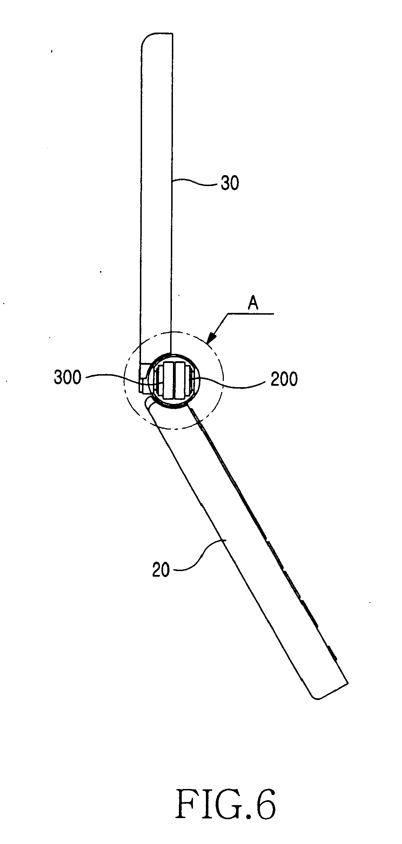

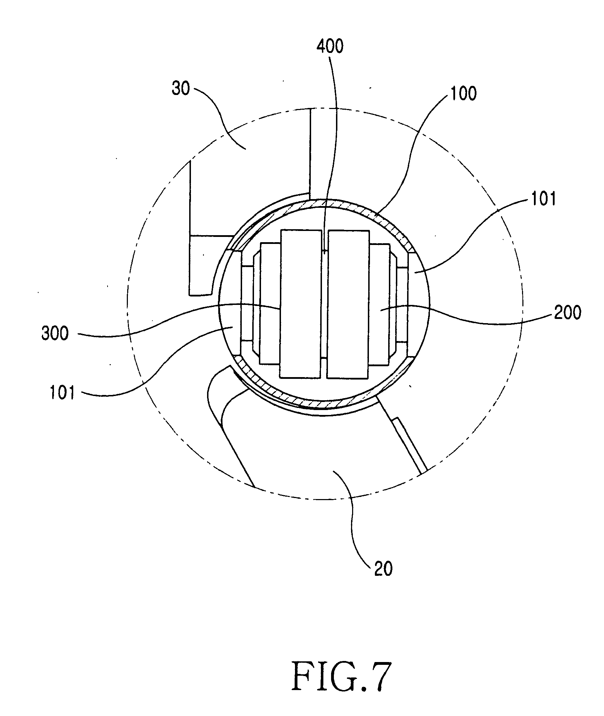

In addition, it is possible to photograph an object in one direction independently using either the first and second camera lens modules 200, 300 or to simultaneously and bi-directionally photograph two objects using both the first and second camera lens modules 200, 300, as shown in FIGS. 6 and 7.

The printed circuit board 400 is formed from a flexible material.

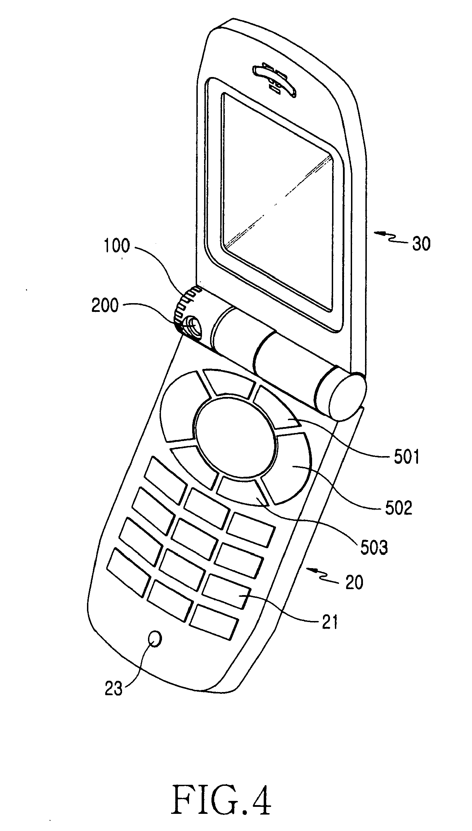

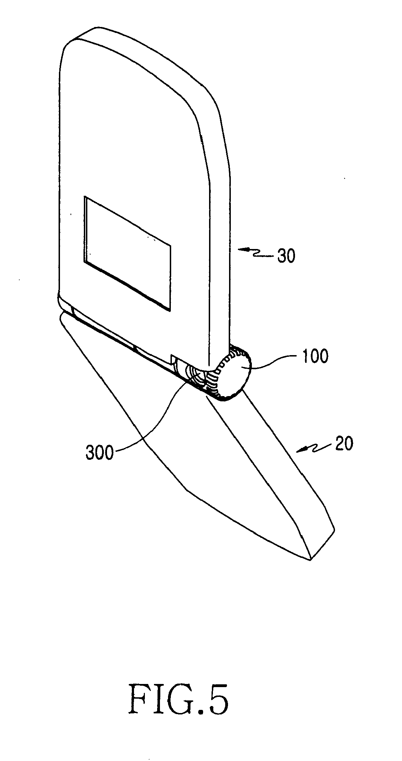

As shown in FIG. 4, the terminal 100 includes a set of lens actuating keys 500 which consist of first, second and third actuating keys 501, 502, 503, so that the first and second lens modules 200, 300 can be independently or simultaneously operated. The first actuating key 501 is provided on the main body 20 of the terminal 10 to be capable of operating the first camera lens module 200 so as to photograph an object in one direction, as shown in FIG. 4. The second actuating key 502 is provided on the main body 20 of the terminal 10 adjacent to the first actuating key 501 to be capable of operating the second camera lens module 200 so as to photograph an object in the other direction, as shown in FIG. 5. The third actuating key 503 is provided on the main body 20 of the terminal 10, adjacent to the second actuating key 502, to be capable of operating both of the first and second camera lens modules 200, 300 to simultaneously and bi-directionally photograph objects, as shown in FIG. 6.

As shown in FIG. 3, one or more connectors 600 are provided at one end of the printed circuit board 400 for electrically connecting the first and second camera lens modules 200, 300 to a control unit (not shown) provided within the main body 20 of the terminal to apply an image signal or image signals captured through the first and second camera lens modules 200, 300 to the control unit.

The first and second camera lens modules 200, 300 are mounted in a lens housing 100 mounted in the terminal 10. The lens housing 100 is capable of protecting the first and second lens modules 200, 300. The lens housing 100 is formed with plural lens apertures 101 to externally expose the camera lenses of the first and second lens modules 200, 300.

Now, the operation of the mobile terminal configured as described above and having multi-directional camera lens modules according to a preferred embodiment is described in more detail with reference to FIGs. 3 to 7.

As shown in FIG. 3, a folder type mobile terminal 10 includes first and second lens modules 200, 300 on a printed circuit board 400 and is mounted in a lens housing 100 provided in the mobile terminal.

Because the lens housing 100 is formed with plural lens apertures 101, the camera lenses mounted in the first and second lens modules 200, 300 are externally exposed through the lens apertures 101 to be capable of photographing in the directions set through the first and second camera lens modules 200, 300 mounting within the lens housing 100.

One or more connection connectors 600, provided at one end of the printed circuit board 400, are electrically connected to a control unit (not shown) provided in the main body 20 of the terminal 10.

With this arrangement if the terminal 10 is used in a photographing mode, the user can photograph his or her own figure by pressing a first actuating key 501 provided in the main body 20 of the terminal 10 so that the first camera lens module is independently operated to photograph the figure, as shown in FIG. 4.

When it is desired to photograph an object or a scene distant from the terminal 10, the user can photograph the object or the scene by pressing a second key 502 provided in the main body 20 of the terminal 10, so that the second camera lens module 300 located opposite to the first camera lens module 300 is independently operated to photograph the object or the scene, as shown in FIG. 5.

If it is desired to photograph the user's own figure and an object distant from the terminal 10, the user can simultaneously photograph the user's figure and the object by pressing a third actuating key 503 provided in the main body 20 of the terminal, so that the first and second camera lens modules 200, 300, which are respectively located at front and rear parts of the terminal 10, are simultaneously operated, as shown in FIGs. 6 and 7.

The moving image signal or signals captured by the first and second lens modules 200, 300 are applied to a control unit (not shown) of the main body 20 through the connectors 600 of the printed circuit board 400 to be displayed on a liquid crystal display 31 provided in the folder 30, as shown in FIG. 4.

As described above, photography in the prior art has been inconvenient in that it is necessary for a user to directly grip and rotate a single camera lens module so as to photograph in the forward and rearward directions. The inventive terminal 10 is provided with first and second camera lens modules 200, 300 capable of photographing in the forward and rearward directions. Thereby, it is possible to easily and conveniently photograph in the forward and rearward directions by selectively pressing the first, second and third actuating keys 501, 502, 503 to operate the first and second camera lens modules 200, 300.

By selectively pressing the first and second actuating keys 501, 502, it is possible to independently operate the first and second camera lens modules 200 to photograph. By pressing the third actuating key 503, it is also possible to simultaneously operate the first and second camera lens modules 200, 300 to bi-directionally photograph in the forward and rearward directions of the terminal 10. While the invention has been shown and described with reference to certain preferred embodiments thereof, it will be understood by those skilled in the art that various changes in form and details may be made therein without departing from the scope of the invention as defined by the appended claims.

## Claims

1. A mobile terminal (10) comprising:
at least a first and a second camera lens module (200,300) and a printed circuit board (400) interposed between and electrically connected to said camera lens modules (200,300) to apply an image signal or image signals captured through the first and/or second camera lens module (200,300) to a main body (20) of the mobile terminal (10).

2. The mobile terminal according to claim 1, wherein the camera lens modules (200,300) are oriented in different direction to independently and/or simultaneously photograph an object or objects in individual directions.

3. The mobile terminal according to claim 2, wherein the individual directions are opposed to each other.

4. The mobile terminal according to one of the previous claims, wherein the printed circuit board (400) is formed from a flexible material.

5. The mobile terminal according to one of the previous claims, wherein the main body (20) of the terminal (10) is provided with a plurality of actuating keys (500; 501,502, 503) for independently or simultaneously operating the first and second camera lens modules (200,300).

6. The mobile terminal according to claim 5, wherein the plurality of actuating keys comprises:
a first actuating key (501) for operating the first camera lens module (200);
a second actuating key (502) for operating the second camera lens module (300), and
a third actuating key (503) for simultaneously operating first and second camera lens module (200,300).

7. The mobile terminal according to one of the previous claims, wherein it further comprises at least one connector (600) positioned at one end of the printed circuit board (400) and electrically connected to the main body (20).

8. The mobile terminal according to one of the previous claims, wherein the first and second camera lens modules (200,300) are received in a lens housing (100) mounted in the terminal (10), and the lens housing (100) is formed with lens apertures (101) for externally exposing camera lenses (7), each provided in one of the camera lens modules (200,300).

9. The mobile terminal according to one of the previous claims, wherein the second camera lens module (300) is located opposite to the first camera lens module (200).

10. The mobile terminal according to claim 6, wherein the second actuating key (502) is positioned adjacent to the first actuating key (501).
